Europäisches Patentamt

**European Patent Office**

**Office européen des brevets**

(19)

(11) Veröffentlichungsnummer: **0 269 783**
**B1**

(12)                    EUROPÄISCHE PATENTSCHRIFT

(45) Veröffentlichungstag der Patentschrift:
**27.09.89**

(51) Int. Cl.⁴: **H02J 7/10**

(21) Anmeldenummer: **87105296.5**

(22) Anmeldetag: **09.04.87**

(54) **Verfahren zum Laden von Nickel-Kadmium-Akkumulatoren und Schaltungsanordnung zur Durchführung des Verfahrens.**

(30) Priorität: **01.12.86 HU 494986**

(43) Veröffentlichungstag der Anmeldung:
**08.06.88 Patentblatt 88/23**

(45) Bekanntmachung des Hinweises auf die Patenterteilung:
**27.09.89 Patentblatt 89/39**

(84) Benannte Vertragsstaaten:
**AT BE CH DE ES FR GB GR IT LI LU NL SE**

(56) Entgegenhaltungen:
**EP-A- 0 034 003**
**FR-A- 2 007 698**
**US-A- 4 211 969**

(73) Patentinhaber: **BRG Mechatronikal Vállalat, Polgár u. 8-10, H-1033 Budapest(HU)**

(72) Erfinder: **Nagy, Sàndor, Havanna ut 15, H-1181 Budapest(HU)**
Erfinder: **Szoràdy, Gàbor, Dozsa Gy. u. 8, H-1038 Budapest(HU)**

(74) Vertreter: **Patentanwälte Viering & Jentschura, Steinsdorfstrasse 6, D-8000 München 22(DE)**

## Beschreibung

Die Erfindung betrifft ein Verfahren zum Laden von Nickel-Kadmium-Akkumulatoren und eine Schaltungsanordnung zur Durchführung des Verfahrens.

Die Probleme in Verbindung von Ni-Cd-Akkumulatoren sind in der HU-A 189 832 eingehend erörtert. Wie darin dargetan, korreliert die Leerlaufspannung derartiger Akkumulatoren mit dem Ladezustand unter einer beträchtlichen Streuung, so daß am Ende des Ladevorganges daran zu erkennen ist, daß der Wert der in den Entladezyklen mit bestimmter Verzögerung genommenen Spannungsproben einen gegebenen Spannungspegel erreicht. Die derart vorzunehmende Prüfung des Ladezustandes ist deshalb wünschenswert, weil nach Ablauf einer bestimmten Entladung die Schwankung der meßbaren Spannung in Abhängigkeit von dem Ladezustand wesentlich geringer ist als die Schwankung, die im Wert der Leerlaufspannung wahrzunehmen ist.

Nach der erwähnten Druckschrift werden sowohl das Laden als auch das Entladen unter konstantem Strom durchgeführt, dessen Wert beim Laden etwa einen Zehntel der Ag-Kapazität des Akkumulators entspricht und beim Entladen noch niedriger liegt.

Wie in Fig. 2 der erwähnten Druckschrift ersichtlich, weist der Wert der Spannungsproben beim Laden nur eine sehr geringe Steigung auf, und dementsprechend wird durch Vergleichen das Ende des Ladevorganges nur mit einer verhältnismäßig breiten zeitlichen Unsicherheit festgestellt.

Kommen Ni-Cd-Akkumulatoren zum Einsatz, so ist über diese Ladeverhältnisse hinaus auch als nachteilig zu betrachten, daß die Akkumulatoren selbst unter vorschriftsmäßigen und normalen Anwendungsverhältnissen oft Kurzschlußfehler aufweisen. Kurzgeschlossene Akkumulatoren können nicht mehr instandgesetzt werden, und wegen ihrer hohen Preise ziehen kurzschlußbedingte Ausfälle bedeutende Schäden nach sich.

Die Kapazität von Ni-Cd-Akkumulatoren nimmt während der Benutzung zuerst langsam und dann schneller ab. Diese Kapazitätsabnahme ist noch bedeutender, wenn der Akkumulator über eine längere Periode nicht benutzt wird. Da in zahlreichen Einsatzgebieten Akkumulatoren beschränkter Kapazität nicht mehr ausreichen, werden diese als unbrauchbar behandelt.

Ni-Cd-Batterien sind außerordentlich empfindlich gegen eine Schnellaufladung, wie auch aus der EP-A 34 003 hervorgeht, aus der die Merkmale im einleitenden Teil der Patentansprüche 1 und 7 bekannt sind. In dieser Druckschrift wird vorgeschlagen, dem Ladestrom bei warmem Akkumulator einen Rechteckimpuls von z.B. 8A und 3s Dauer zu überlagern.

Grundsätzlich ist das Ziel der Erfindung, ein Ladeverfahren zu verwirklichen, durch welches die Gefahr eines Kurzschlusses bzw. einer Kapazitätsabnahme wesentlich kleiner ist als sie bei herkömmlichen Verfahren droht und durch welches sogar kurzgeschlossene und/oder in ihrer Kapazität beeinträchtigte Ni-Cd-Akkumulatoren regeneriert werden können, wobei darüberhinaus der Ladevorgang wirksamer und von den Einzelstreuungen weniger abhängig ist.

Dies wird erfindungsgemäß durch die Merkmale des Verfahrens nach Anspruch 1 und die Merkmale der Schaltungsanordnung gemäß Anspruch 7 erreicht. Bevorzugte Ausgestaltungen sind in den abhängigen Ansprüchen angegeben.

Die Erfindung baut auf der Ausnützung der Zusammenhänge zwischen den im Akkumulator vorkommenden Erscheinungen und der Auswirkung des Ladevorganges auf diese Erscheinung auf. Beim Laden bilden sich auf den Elektrodenoberflächen anhaftende Ionenknoten in einer inhomogenen Verteilung dort aus, wo sich die Metallatome konzentriert adsorbieren. Auf den Elektroden kommen grobe Metallablagerungen mit großen Kristallstrukturen zustande, deren Materialqualität anders ist als die der Metallionen. Im Betriebszustand ändert sich die relative Stromdichte im Bereich der Ablagerungen, wodurch zuerst die Lagerungskapazität des Akkumulators abnimmt, dann aber bei fortschreitender Ablagerung zwischen den Elektroden Kurzschlüsse zustandekommen.

Der Erfindung liegt die Erkenntnis zugrunde, daß dann, wenn beim Laden von Ni-Cd-Akkumulatoren in der Aufeinanderfolge von Lade- und Entladezyklen die in den einzelnen Zyklen erzeugten konstanten Gleichströme mit sich steil ändernden und mit diesen Gleichströmen in der gleichen Richtung ausgeübten Stromimpulsen überlagert werden, deren Intensität einen gegebenen Schwellenwert übersteigt, sich die Oberflächenverteilung der Elektroden nach Ablauf einer bestimmten Zeitspanne wegen der sich wiederholenden Stromimpulse ändert, die Größe der genannten Metallablagerungen abnimmt und die Elektrodenoberfläche mit der Zeit gleichmäßig wird.

Die geschilderte Wirkung ist wahrscheinlich dadurch zu erklären, daß sich die Stromdichte im Bereich der Ablagerungen (gegebenenfalls sind dies die Kurzschlußstellen) dem Diffusionsgrenzstrom nähert und ein zum Unendlichen laufendes Diffusionspotential auftritt. Die steilen Wechselimpulse rühren den Elektrolyten im Bereich des Kristalls sehr auf und fördern dementsprechend das Auflösen des Kristalls im Elektrolyten. Selbst eine teilweise Auflösung hat die Behebung des Kurzschlusses zur Folge und der Akkumulator kann wieder in Betrieb genommen werden.

Als Ausgangspunkt für die Erfindung ist ferner erkannt worden, daß sie sich steil ändernden und periodisch wiederholenden Stromimpulse für das Laden der Akkumulatoren fortlaufend herangezogen werden können und sich auch beim Laden fabrikneuer Akkumulatoren günstig auswirken. Dies ist damit zu erklären, daß die im Elektrolyten erzeugte Ionenfront durch ihre Stöße auch solche Ionen in Bewegung setzt und leitend macht, die sonst wegen des sich beim Gleichstromladen ausbildenden Teilpotential-Gleichgewichtes inaktiv sind. In der Heimholtz-Zone kommt durch diese Bewegung auf der Elektrodenoberfläche eine größere Ionenaktivität zustande. Dementsprechend verbessert sich der Ladewirkungsgrad der Akkumulatoren und verringert sich die für das Laden erforderliche Zeit, was auch eine gewisse Energieeinsparung mit sich bringt.

Durch das kräftige innere Rühren des Elektrolyten werden ein Zustandekommen der früher sich unvermeidlich ausbildenden Ionenknoten sowie die sich daraus ergebende Kapazitätsabnahme und Kurzschlüsse verhindert, so daß eine bedeutende Verlängerung der Lebensdauer und Erhöhung der Zuverlässigkeit erzielt werden können. Durch das erfindungsgemäße Verfahren bilden sich auf der Oberfläche der Elektroden von regelmäßig geladenen Akkumulatoren zahlreiche winzige Kristallkörperchen aus, die eine sehr feine Struktur aufweisen und elektrochemisch gleichmäßig aktiv sind. Diese Erscheinung erkennt man an der Verbreitung der aktiven Oberfläche, durch welche Verbreiterung die Kapazität des Akkumulators etwa um 8 bis 13% erhöht wird.

Bei dem Verfahren nach der Erfindung werden die dem Gleichstrom überlagerten Impulse zeitlich mit dem Anfang der Lade- und Entladeabschnitte abgestimmt, damit die gesamte Änderungsamplitude mindestens das 7 bis 7,5-fache des der Zehntelkapazität entsprechenden Stromwerte beträgt. Zusätzlich zu den Anfangsimpulsen werden den Lade- und Entladeströmen weitere steilflankige Stromimpulse überlagert.

Damit sich an beiden Elektroden ähnliche Vorgänge abspielen, sollten zweckmäßig solche Imuplsamplituden gewählt werden, bei welchen die gesamte Anfangsänderung (Stromsprung) in beiden Richtungen gleich ist. Für die Energie der in den einzelnen Abschnitten erzeugten Impulse ist zweckmäßig der Wert 3 bis 5 mWs zu wählen, woraus der Auslösezeitpunkt der Impulse bei den jeweiligen Stromwerten bestimmt werden kann. In den Ladezyklen sollte der Wert des stationären Stromes unter dem Dreifachen des der erwähnten Zehntelkapazität entsprechenden Stromes, immerhin aber so hoch wie möglich gehalten werden. Bei bestimmten Akkumulatortypen kann die dauerhafte Verwendung eines diesen Wert übersteigenden Stromes abträglich sein. Der in den Entladezyklen erzeugte Entladestrom ist für ein Drittel bis zur Hälfte des Ladestromes zu wählen.

Auch bei dem erfindungsgemäßen Verfahren ist es zweckmäßig, das Ende des Ladezyklus in den Entladezyklen mit Hilfe von Spannungsproben festzustellen, die mit einer bestimmten Verzögerung, z.B. 5 Sekunden nach dem Beginn der Entladezyklen, genommen werden. Das Laden kann zum Beispiel dann beendet werden, wenn der Wert dieser Spannung je Zelle 1,41 V erreicht. Eine merkwürdige Folgeerscheinung des erfindungsgemäßen Verfahrens ist es, daß der Wert dieser Spannungsproben während des Ladevorganges leicht ansteigt, dann aber vor Erreichen des vollkommenen Ladezustandes steil zunimmt. Durch diese steile Zunahme wird die Genauigkeit des Vergleichens wesentlich gesteigert und ohne Gefahr eines Überladens können gleichmäßige Akkuladungen erreicht werden.

Die Teile einer bevorzugten Ausführung der Schaltungsanordnung zur Durchführung des erfindungsgemäßen Verfahrens sind insbesondere:

– eine Ladeschaltung mit einem am Akkumulator angeschlossenen Stromgenerator und einem dazu parallel geschalteten, sich steil ändernde Impulse erzeugenden gesteuerten Stromgenerator sowie eine ähnlich aufgebaute Entladeschaltung, wobei die Generatoren Auslöse- und Abstelleingänge aufweisen und auch als ein einziger gesteuerter Stromgenerator ausgeführt werden können;

– eine die Lade- und Entladezyklen bestimmende Verzögerungsgruppe, vorteilhaft ein Impulsgenerator;

– gesteuerte Schaltelemente, die an den Ausgängen der Verzögerungsgruppe sowie an Auslöse- und Abstelleingängen der Lade- und Entladeschaltungen angeschlossen sind;

– eine die Akkumulatorspannung in den Entladezyklen mit gegebener Verzögerung nach deren Beginn wahrnehmende und sie mit dem dem Ladezustand zugeordneten gegebenen Spannungspegel vergleichende Spannungsfühlergruppe;

– eine mit dem Vergleichssignal ausgelöste, die Lade- und Entladevorgänge abschaltende Eingriffsgruppe.

Das erfindungsgemäße Verfahren und die zur Durchführung des Verfahrens geeignete erfindungsgemäße Schaltungsanordnung werden nachfolgend im Zusammenhang mit Beispielen anhand der Zeichnung dargestellt. In der Zeichnung zeigen:

Fig. 1: ein Stromstärke-Zeit-Diagramm zur Veranschaulichung von zwei vollständigen Zyklen des erfindungsgemäßen Verfahrens;

Fig. 2: einen Teil der Elektrodenoberfläche eines mit herkömmlichem Gleichstrom-Ladevorgang geladenen Akkumulators in 600-facher Vergrößerung nach dem 22. Einsatzzyklus;

Fig. 3: ein Diagramm ähnlich wie in Fig. 2, welches für den nach dem erfindungsgemäßen Verfahren geladenen Akkumulator gleichen Typs nach dem 22. Einsatzzyklus aufgenommen wurde;

Fig. 4: ein Spannungs-Zeit-Diagramm zur Veranschaulichung von zwei in einen Kurzschlußzustand geratenen Akkumulatoren während deren Regenerierung;

Fig. 5: ein Spannungs-Zeit-Diagramm zur Veranschaulichung der Regenerierung eines Akkumulators, der bereits mehr als 9 Jahre nicht benutzt worden war und seine Kapazität verloren hat;

Fig. 6: ein Ladediagramm von zwei entladenen Akkumulatoren, von denen der eine Akkumulator nach einem herkömmlichen Verfahren und der andere Akkumulator nach dem erfindungsgemäßen Verfahren geladen wird;

Fig. 7: ein Ladediagramm von drei unterschiedliche Ladezustände aufweisenden Akkumulatoren; und

Fig. 8: das Prinzipbild einer zur Durchführung des erfindungsgemäßen Verfahrens geeigneten Schaltungsanordnung.

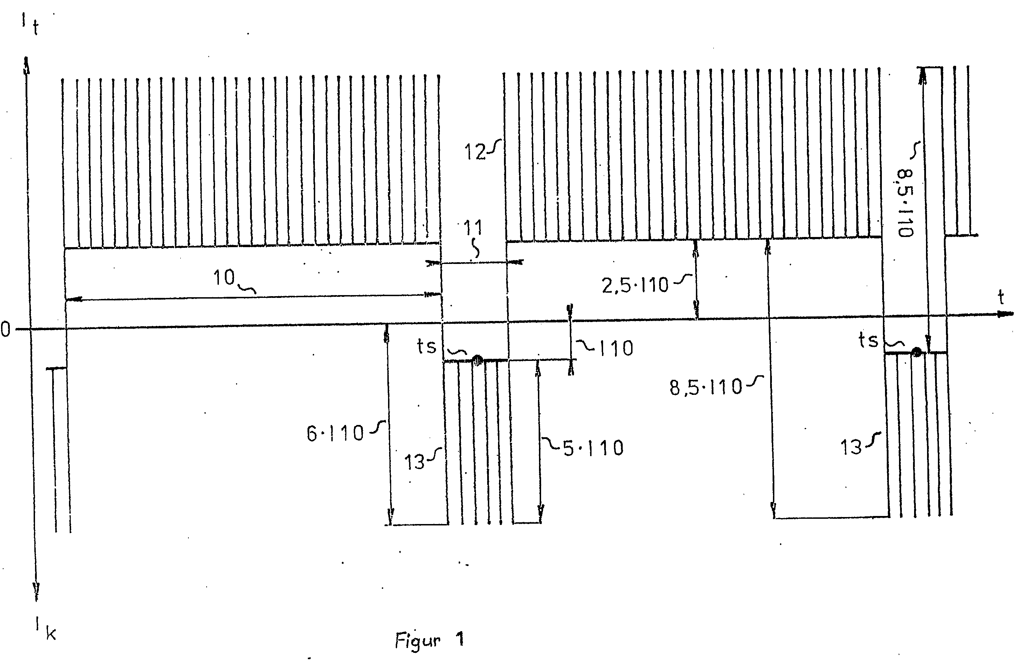

Entsprechend dem erfindungsgemäßen Verfahren wird der Ni-Cd-Akkumulator während aufeinanderfolgender Lade- und Entladezyklen geladen. nach dem in Fig. 1 geschilderten Beispiel dauert jeder Ladezyklus 10 eine Minute und jeder darauffolgende Entladezyklus 11 zehn Sekunden. Während nach dem Verfahren entsprechend der eingangs angeführten Hu-Druckschrift in den Lade- und Entladezyklen einzelne konstante, miteinander jedoch nicht übereinstimmende Lade- bzw. Entladeströme eingesetzt werden, ist es aus dem Diagramm nach Fig. 1 ersichtlich, daß jeder Ladezyklus 10 mit einem kräftigen und kurz andauernden Ladeimpuls 12 und jeder Entladezyklus 11 mit einem in entgegengesetzter Richtung auftretenden ähnlichen Entladeimpuls 13 beginnt und dem im übrigen konstanten Strom dann bis zum Ende des Zyklus weitere Lade- bzw. Entladeimpulse überlagert werden.

In der relativen Darstellungsweise von Fig. 1 sind die einzelnen Stromwerte entsprechend dem Bruchteil der Ah-Kapazität des Akkumulators angegeben worden. Im Ladezyklus 10 beträgt der stationäre Ladestrom It $2,5 \cdot I_{10}$ und im Entladezyklus 11 ist der stationäre Entladestrom Ik gleich $I_{10}$, wobei $I_{10}$ einen Stromwert bedeutet, der einem Zehntel der Ah-Kapazität entspricht. Im Verhältnis zur Null-Achse weist der Ladeimpuls 12 den Wert von $7,5 \cdot I_{10}$ auf, d.h. er ist um den Sprung $5 \cdot I_{10}$ größer als der stationäre Ladestrom It. Im Entladezyklus 11 ist der Wert des Entladeimpulses $13 - 6 \cdot I_{10}$, und beim Wiedererreichen des stationären Entladestromes Ik beträgt der Stromsprung $5 \cdot I_{10}$.

Es ist festzustellen, daß der Absolutwert der Anlaufflanke eines jeden Lade- und Entladeimpulses 12 und 13, d.h. die gesamte Sprunggröße, gleichmäßig $8,5 \cdot I_{10}$ ist. Die Energie der den stationären Stromwerten überlagerten Impulse liegt bei 3 bis 5 mWs. Daraus ergibt sich, daß im Falle eines Akkumulators einer Kapazität von 500 mAh die Dauer der Lade- und Entladeimpulse 12 und 13 etwa 1,5 ms beträgt, welcher Wert wesentlich kleiner ist als die gesamte Zykluslänge. Auch für die Mittel der Entladezyklen 11 sind Probenahme-Zeitpunkte gewählt worden, und die Regelung des Ladevorganges wird anhand der Meßwerte der in den Probenahmen-Zeitpunkten ts der einzelnen Zyklen abgenommenen Spannung Um erfolgen.

Beispiel 1

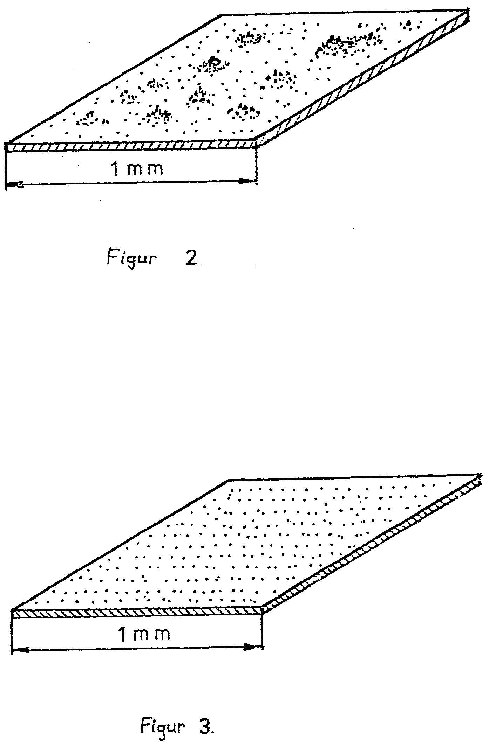

Die Wirkung des erfindungsgemäßen Verfahrens auf die Oberflächenverteilung der Elektroden wurde an Akkumulatoren des Typs VARTA 10/600RSE geprüft. Diese waren vier Stück fabrikneue Akkumulatoren. Von ihnen wurden zwei nach Herstellungswerkangaben mit Gleichstrom, die anderen zwei mit Hilfe der Impulse geladen, die die in Fig. 1 gezeigten Abläufe aufwiesen. Der Ladevorgang wurde beendet, als die Zellenspannung den Wert von 1,41 V erreicht hatte. Nach jedem Aufladen sind die Akkumulatoren über 2 Stunden beiseite gelegt worden. Darauf folgte ein Entladevorgang mit einem Entladestrom $I_{10}$ bis zum Erreichen einer Zellenspannung von 0,9 V. Nach dem 22. Zyklus wurden die Akkumulatoren zerlegt. In Fig. 2 ist ein Schnitt von 1 mm der Elektrode des nach dem herkömmlichen Verfahren mit Gleichstrom aufgeladenen Akkumulators in 600-facher Vergrößerung, in Fig. 3 derselbe Schnitt des nach dem erfindungsgemäßen Verfahren aufgeladenen Akkumulators ersichtlich. Die Merkmale der beiden Elektrodenoberflächen unterscheiden sich wesentlich voneinander. Während im Falle der Fig. 2 mehrere herausragende Stege zustandekommen, in deren Bereichen eine ungleichmäßige, stachelige und rauhe Verteilung wahrzunehmen ist, kann im Falle der Fig. 3 eine gleichmäßig feinkörnige Oberfläche mit Samtcharakter festgestellt werden.

Beispiel 2

Zur Regenerierung wurden folgende kurzgeschlossene und deshalb abgeschriebene Ni-Cd-Akkumulatoren geladen: 4 Stück STORNO BU806 mit 225 mAh Kapazität, 2 Stück STORNO BU807 mit 450 mAh Kapazität, 2 Stück VARTA 8/500Rs mit 500 mAh Kapazität und 1 Stück VARTA 10/600RSE mit 600 mAh Kapazität. Die Akkumulatoren waren vorher betriebsmäßig für das Speisen von Handfunkgeräten eingesetzt und vorschriftsmäßig mit Gleichstrm geladen worden.

Bei dem Laden nach dem erfindungsgemäßen Verfahren hat die Spannung jeder kurzgeschlossenen Zelle binnen 0,3 bis 4 Stunden nach dem Beginn des Ladevorganges mit einem verhältnismäßig raschen Sprung den Wert zwischen 1,22 und 1,25 V angenommen.

Der Ladevorgang wurde solange fortgesetzt, bis der Wert der Spannung Um je Zelle 1,41 V erreicht hat. Hierauf wurden die Akkumulatoren beiseitegelegt und wurde ihre Kapazität unter einem Laststrom von $I_{10}$ gemessen. Dabei lag die Kapazität im Bereich von 7 bis 33 % des Nominalwertes. Während der derartigen Regenerier-Ladezyklen stieg die auslastbare Kapazität stufenweise an und ereichte am Ende des fünften Zyklus 64 bis 72 % des Nominalwertes, was den betriebsmäßigen Einsatz bereits gestattet.

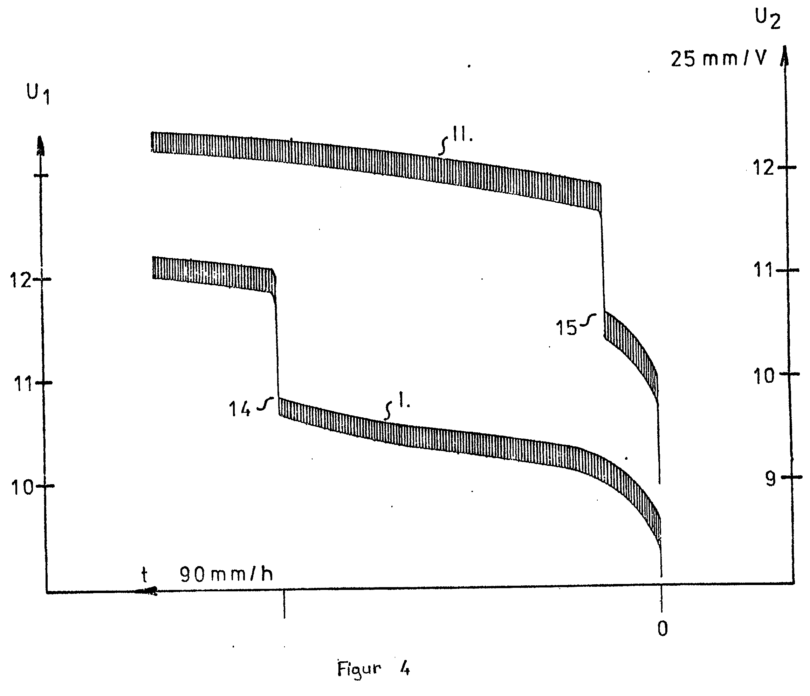

In Fig. 4 ist das Spannungs-Zeit-Diagramm des ersten Ladevorganges für zwei derartige Akkumulatoren ersichtlich. Bedingt duch die Gegebenheiten der eingesetzten Schreibvorrichtung steigt die Zeitbasis von rechts nach links um 90 mm/h an.

Damit die Diagramme I und II getrennt werden können, ist die linke Spannungsachse U1 nach oben um 1 V verschoben worden. Die Auflösungsempfindlichkeit entlang der Ordinaten beträgt 25 mm/V.

Wegen des gewählten Zeitmaßstabs laufen die Lade- und Entladeimpulse zusammen und sind im Diagramm nicht proportioniert dargestellt. In den einzelnen Akkumulatoren sind je 10 Zellen miteinander in Reihe geschaltet und eine von ihnen ist kurzgeschlossen. Aus dem Diagramm I ist ersichtlich, daß in der Periode von etwa 1 Stunde nach dem Beginn des Ladevorganges die Spannung langsam ansteigt, und ihr Wert ist zu dem von 9 miteinander in Reihe geschalteten Zellen gleich. Die zehnte Zelle ist weiterhin kurzgeschlossen. Im dem Bezugszeichen 14 bezeichneten Zeitpunkt ist die zehnte Zelle regeneriert worden und nach einem dieser Regenerierung entsprechenden Spannungssprung von etwa 1,2 V setzt sich der Ladevorgang auf einem höheren Pegel fort. Derselbe Vorgang spielte sich auch bei dem zweiten Akkumulator ab, mit dem Unterschied, daß hier die Regenerierung beretis vor Ablauf einer ganzen Viertelstunde nach dem Beginn des Ladevorganges, im mit dem Pfeil 15 bezeichneten Zeitpunkt, zustandekam.

Beispiel 3

Im Einklang mit dem erfindungsgemäßen Ladeverfahren wurden Prüfungen mit zehn Stück VARTA RS4 Ni-Cd-Akkumulatoren mit je einer Nennkapazität von 4 Ah durchgeführt, die berets mehr als 9 Jahre nicht benutzt worden waren. Nach einem herkömmlichen Gleichstrom-Ladevorgang hat die Zellenspannung von fünf dieser Akkumulatoren nicht einmal den Normalwert erreicht. Im Falle der anderen fünf Akkumulatoren hat die Spannung zwar den Normalwert angenommen, jedoch ihre Kapazitt blieb unter 2 bis 5 % des Nominalwertes selbst nach dem fünften Gleichstrom-Lade-Entladezyklus.

Anschließend wurden diese Akkumulatoren nach dem erfindungsgemäßen Verfahren geladen. Es wurde festgestellt, daß innerhalb der ersten 45 Minuten die Spannung einer jeden Zelle den Normalwert erreicht hat, und nach dem ersten Zyklus die auslastbare Kapazität zwischen 35 und 41 % des Nominalwertes, nach dem zehnten Zyklus zwischen 46 und 53 % des Nominalwertes lag, so daß die Akkumulatoren betriebstüchtig wurden.

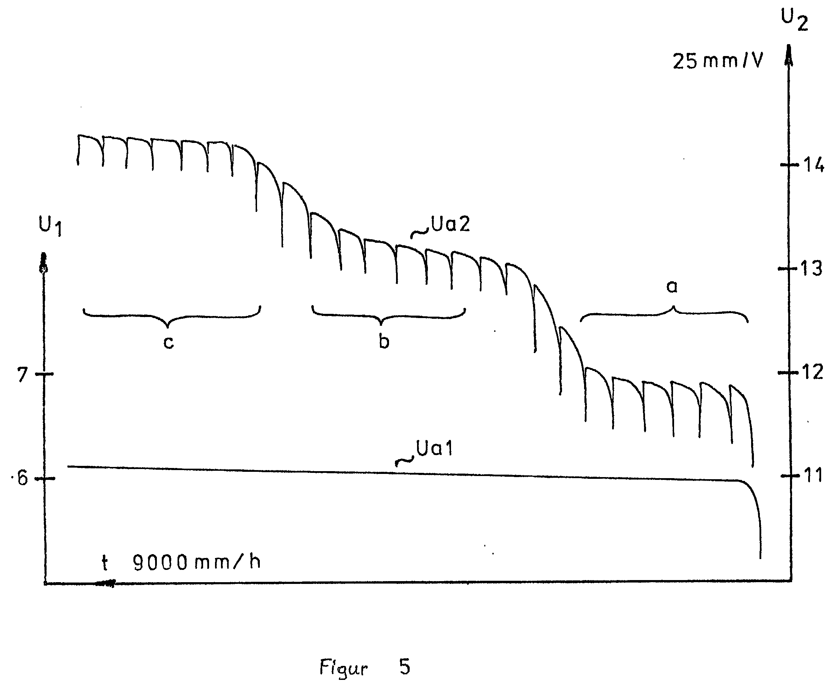

In Fig. 5 ist das Ladediagramm solcher Akkumulatoren dargestellt, wobei die Kurve Ua1 die Erfolgslosigkeit des Gleichstromladevorganges, die Kurve Ua2 en Regenerierungsabschnitt des erfindungsgemäßen Ladeverfahrens zeigt. Hierbei wurden größere Maßstäbe verwendet als in Fig. 4, d.h. für die Abszisse 9000 mm/h. Die Kurve Ua2 setzt sich aus drei voneinander merklich abgetrennten Abschnitten a, b und c zusammen. Im Anfangsabschnitt a ist die Spannung noch gering und zwei Zellen erreichten noch nicht ihren Betriebswert. Am Ende des Abschnitts a ist eine Zelle bereits regeneriert und der zustandegekommene Spannungssprung ist deutlich ersichtlich. Im Abschnitt b setzt sich der Ladevorgang fort und am Ende dieses Abschnittes ist auch die zweite Zelle schon regeneriert. Nach dem Spannungssprung setzt sich der Ladevorgang im Abschnitt c bereits mit dem Normalpegel fort.

Beispiel 4

Um die Zusammenhänge des erfindungsgemäßen Verfahrens zu prüfen, sind fabrikneue VARTA 10/600RSE Akkumulatoren getestet worden. Eine Prüfgruppe gleichartiger neuer Akkumulatoren wurden nach dem herkömmlichen Gleichstromverfahren geladen. Bei den Lade- und Entladevorgängen wurden den unter Beispiel 1 gezeigten Hinweisen gefolgt. Es hat sich ergeben, daß bei den nach dem erfindungsgemäßen Verfahren geladenen Akkumulatoren eine um 8 bis 13 % höhere Kapazität erreicht werden konnte als bei der Prüfgruppe.

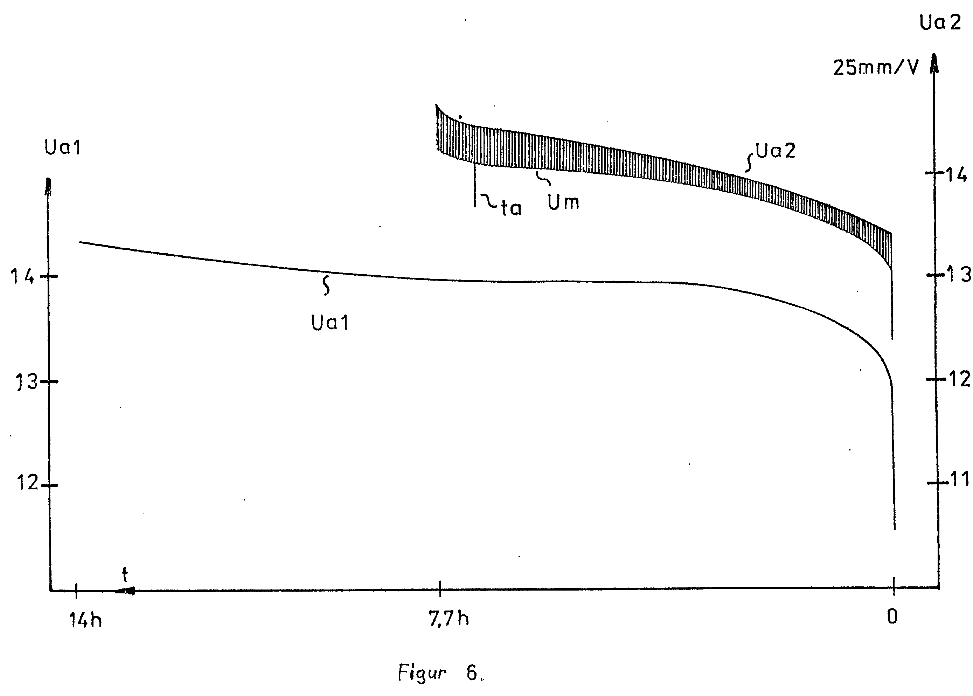

In Fig. 6 ist die bei dem Ladevorgang gemessene Charakteristik gezeigt, wobei der Übersichtlichkeit halber die Spannungswerte angebenden Ordianten der beider Kurven um 1 V gegeneinander verschoben sind. Im Falle des herkömmlichen Gleichstromverfahrens steigt die Spannung entsprechend der Kurve Ua1 langsam, und in 14 Stunden nach Beginn des Ladevorgangs erreicht sie den Pegel von 14,1 V, wodurch das Ende des Ladevorganges gegeben ist. Bei der Kurve Ua2 stellt die Spannung Um des Akkumulators die untere Hüllkurve dar. Am Anfang steigt die Kurve langsam an. Im Zeitpunkt ta steigt die Spannung Um rasch an, und kurz danach erreicht sie den das Ende des Ladevorganges bedeutenden Schwellenwert von 14,1 V. Wie ersichtlich schneidet die Kurve den Vergleichsschwellenwert wesentlich steiler als die Kurve Ua1, so daß der Zeitpunkt des Endes des Ladevorganges wegen des Vergleichsfehlers innerhalb wesentlich engerer Grenzen schwankt, und daher ist die Gefahr einer sich daraus ergebenden Überladung praktisch ausgeschlossen.

Aus Fig. 6 ist festzustellen, daß die je Zelle bis zu 0,9 V entladenen Akkumulatoren nach dem erfindungsgemäßen Verfahren wesentlich schneller und mit geringerem Energieaufwand geladen werden können.

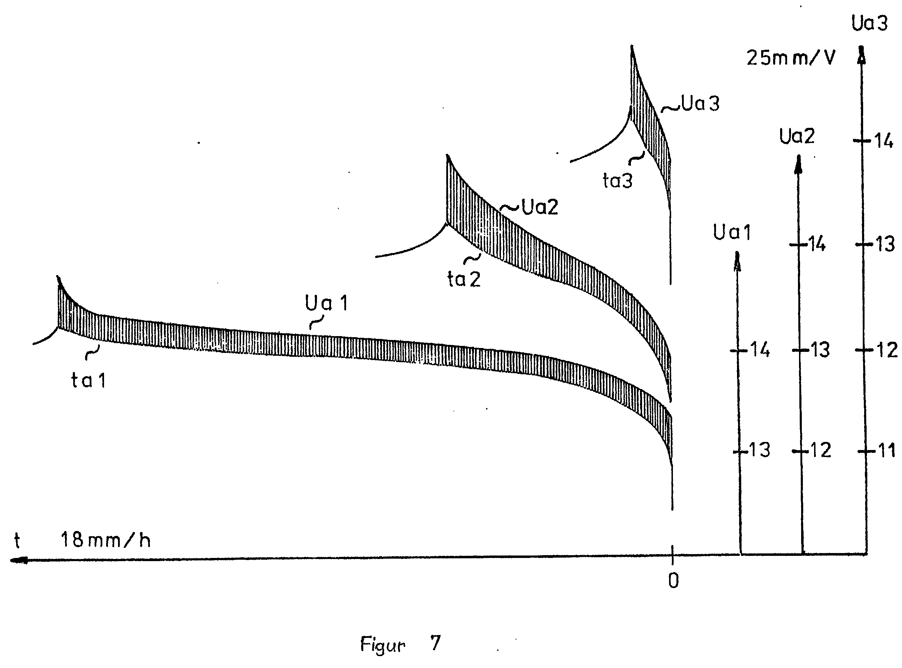

Es stellte sich heraus, daß der im dem gesamten Ladezustand unmittelbar vorangehenden Zeitpunkt ta ansteigende und in Fig. 6 gezeigte steile Abschnitt ein allgemeines Merkmal des entsprechend des erfindungsgemäßen Verfahrens vorgenommenen Ladevorganges ist, was keineswegs vom dem Ladezustand vorangehenden Zustand des Akkumulators abhängt. Diese Erscheinung kann mit den Kurven Ua1, Ua2 und Ua3 der Fig. 7 nachgewiesen werden. Die Spannungsachse aller drei Diagramme sind je um 1 V in Ordinaten-Richtung gegeneinander verschoben und der Zeitmaßstab beträgt 18 mm/h. Die Kurve Ua1 zeigt den Ladevorgang des bis zum Wert von 0,9 V (d.h. vollkommen) entladenen Akkumulators, die Kurve Ua2 den Ladevorgang eines Akkumulators mit unbekanntem Ladezustand, Kurve Ua3 den Ladevorgang eines vollständig geladenen und nach einer Wartezeit von 2 Stunden wieder an die Ladeschaltung angeschlossenen Akkumulators. Alle drei Akkumulatoren sind die im Beispiel 4 genannten Typen. Wenngleich in den drei Fällen der Zeitaufwand des Ladevorganges von dem Anfangsladezustand des gegebenen Akkumulators abhängig ist, kann anhand der Diagramme festgestellt werden, daß die Spannungs-Zeit-Kurve in den Zeitpunkten ta1, ta2 und ta3 jeweils mit gleicher Steilheit ansteigt und mit einer markanten Steigung den Vergleichspegel erreicht.

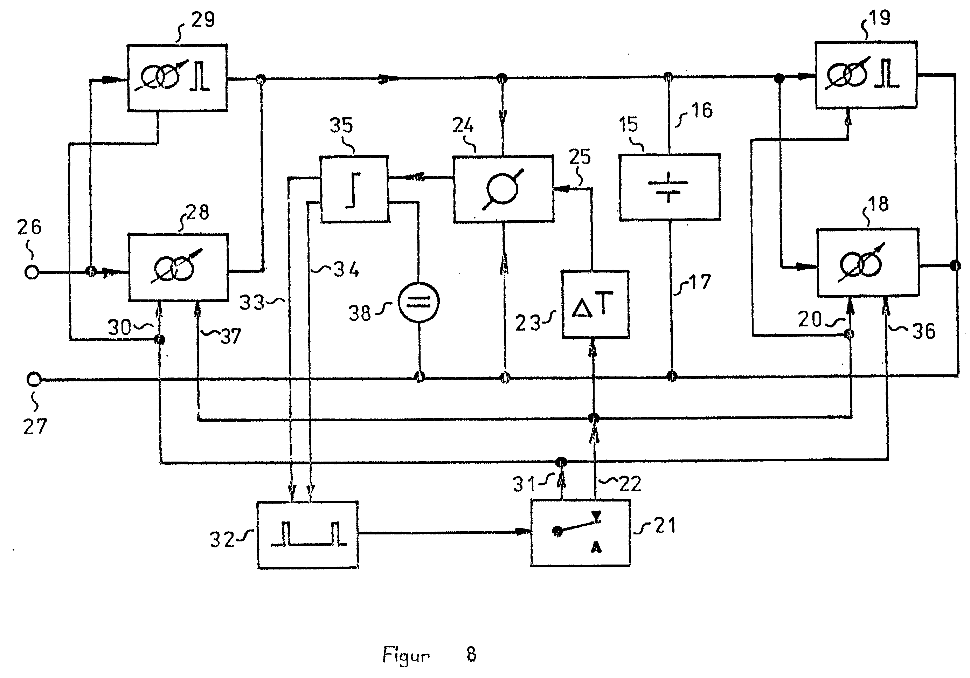

Eine Ausführungsform der zur Duchführung des erfindungsgemäßen Verfahrens geeigneten Schaltungsanordnung ist in Fig. 8 gezeigt. Zwischen den Klemmen 16 und 17 des zu ladenden Akkumulators 15 sind ein gesteuert ausgelöster erster Stromgenerator 18 und ein mit ihm gleichzeitig ausgelöster erster Impulsgenerator 19 angeschlossen. Der Auslöseeingang 20 des ersten Stromgenerators 18 ist mit dem Auslöseeingang des ersten Impulsgenerators 19 und mit dem den Entladevorgang auslösenden und den Ladevorgang abstellenden Ausgang 22 eines gesteuerten Schaltelements 21 verbunden. Der Ausgang 22 steht über eine Verzögerungsschaltung 23 auch mit dem Genehmigungseingang 25 eines zum Akkumulator 15 prallalgeschalteten Spannungsmessers 24 in Verbindung.

Die Klemme 27 der die Ladespannung liefernden Energiequelle ist mit der Klemme 17, und die andere Klemme 26 der Energiequelle mit dem zweiten gesteuerten Stromgenerator 28 und dem zweiten ausgelösten Impulsgenerator 29 verbunden, welche Baugruppen mit ihren Ausgängen mit der Klemme 16 des Akkumulators 15 verbunden sind. Der Auslöseeingang 30 des zweiten Stromgenerators 28 ist zu dem Auslöseeingang des zweiten Impulsgenerators 29 parallelgeschaltet und mit dem den Ladevorgang genehmigenden und den Entladevorgang abstellenden Ausgang 31 des gesteuerten Schaltelementes 21 verbunden. Der Steuereingang des gesteuerten Schaltelementes 21 ist mit dem Ausgang der das Verhältnis der Lade- und Entladezyklen einstellenden Verzögerungsschaltung 32 verbunden, die einen Abstelleingang 33 und einen Auslöseeingang 34 aufweist, welche Eingänge und den Ausgängen jeweils entgegengesetzten logischen Wertes eines Vergleichsgliedes 35 angeschlossen sind.

Der erste und zweite Stromgenerator 18 und 28 weisen je einen Abstelleingang 36 bzw. 37 auf, die mit dem Ausgang 31 bzw. 22 des gesteuerten Schaltelementes 21 verbunden sind. Das Vergleichsglied 35 wird mit einer Hysterese--Charakteristik gekippt, und sein Signaleingang ist am Ausgang des Spannungsmessers 24, sein Vergleichseingang an einer Vergleichsspannungsquelle 38 angeschlossen.

Die Funktionsweise der erfindungsgemäßen Schaltungsanordnung wird mit Bezug auf Fig. 1 beschrieben:

Liegt die Spannung des Akkumulators 15 unterhalb des Vergleichspegels, so steuert die Verzögerungsschaltung 32 das gesteuerte Schaltglied 21 mit den den Lade- und Entladezyklen 10 und 11 entsprechenden Verzögerungssignalen an. In den Ladezyklen 10 ist sein Ausgang 31, und in den Entladezyklen 11 sein Ausgang 22 aktiviert.

Am Anfang des Ladevorganges wird durch das Anlaufen des Ausganges 31 einesteils der zweite Stromgenerator 28, anderenteils der zweite Impulsgenerator 29 ausgelöst, die dem Akkumulator 15 gemeinsam einen in Fig. 1 im Zyklus 10 sichtbaren Strom zuführen. In diesem Zyklus sorgt der Aktivzustand des Abstelleingangs 36 für die Verhinderung der Entladeschaltungen. Am Anfang des Entladezyklus 11 ändert sich der Zustand des gesteuerten Schaltelementes 21, die Ladeschaltungen schalten sich aus und der Aktivzustand des Auslöseeinganges 20 löst den ersten Stromgenerator 18 und den ersten Impulsgenerator 19 aus, worauf sich der im Anschnitt 11 der Fig. 1 ersichtliche Entladestrom ausbildet. Am Anfang des Entladezyklus 11 wird die Verzögerungsschaltung 23 ausgelöst und sie genehmigt im Zeitpunkt ts (Probenahme) die Spannungsmeßschaltung 24, die den Momentanwert der Spannung Um mißt und an ihrem Ausgang den Signalpegel aufrechterhält.

Dieser Prozeß wiederholt sich solange, bis die genommene Probenahmespannung Um die Spannung der Bezugsspannungsquelle 38 erreicht. In diesem Zeitpunkt kippt das Vergleichsglied 35 und verhindert die Verzögerungsschaltung 32 sowie die Lade- und Entladeschaltungen. Mit Hilfe einer in der Zeichnung nicht gezeigten Schaltung wird die Bezugsspannung des Vergleichsgliedes 35 geändert, damit der Ladevorgang nur dann wieder ausgelöst wird, wenn die Spannung unter eine gegebene Leerlaufspannung gesunken ist. Diese Wiederauslösung folgt auf das Rückkippen des Vergleichsgliedes 35.

Anstelle der beiden Stromgeneratoren und der zu ihnen parallelgeschalteten Impulsgeneratoren können selbstverständlich andere gleichwertige Schaltungen, zum Beispiel ein Stromgenerator mit gesteuertem Quellenstrom eingesetzt werden, an deren Steuereingänge Signale entsprechend der Stromfunktion von Fig. 1 geführt werden müssen.

**Patentansprüche**

1. Verfahren zum Laden von Nickel-Kadmium-Akkumulatoren, wobei dem Akkumulator (15) während Ladezyklen (10) gegebener erster Zeitdauer ein Ladestrom vorgeschriebenen Wertes zugeführt und der Akkumulator (15) während Entladezyklen (11) kürzerer zweiter Zeitdauer mit einem zweiten Strom vorbestimmten Wertes beaufschlagt wird und die erwähnten Zyklen (10, 11) abwechselnd wiederholt werden, wobei in den Ladezyklen (10) jeweils zu deren Beginn dem Ladestrom ($I_l$) ein in die gleiche Richtung wie dieser zeigender steilflankiger erster Stromimpuls (12) mit einer Stromänderung, die mindestens ein Siebenfaches des der Zehntelkapazität ($I_{10}$) des Akkumulators (15) entsprechenden Stromes, beträgt, überlagert wird, dadurch gekennzeichnet, daß in den Entladezyklen (11) jeweils zu deren Beginn dem Entladestrom ($I_k$) ein in die gleiche Richtung wie dieser zeigender steilflankiger erster Entlade-Stromimpuls (13) überlagert wird, wobei zu Beginn der einzelnen Zyklen (10, 11) jeweils die genannte, mindestens siebenfache Stromänderung herbeigeführt wird, und daß den vorbestimmten Lade- und Entladeströmen in den einzelnen Zyklen mehrere weitere steilflankige Stromimpulse überlagert werden, deren Amplitude und Energiegehalt höchstens die des jeweils ersten Stromimpulses erreichen.

2. Verfahren nach Anspruch 1, dadurch gekennzeichnet, daß der Ladestrom ($I_l$) vorbestimmten Wertes im Vergleich zu dem dem Zehntelwert entsprechenden Strom ($I_{10}$) höchstens eine dreifache Größe aufweist.

3. Verfahren nach Anspruch 1 oder 2, dadurch gekennzeichnet, daß der Entladestrom ($I_k$) vorbestimmten Wertes höchstens die Hälfte, mindestens ein Viertel des vorbestimmten Ladestromwertes beträgt.

4. Verfahren nach einem der Ansprüche 1 bis 3, dadurch gekennzeichnet, daß die Energie der im Entladezyklus (11) eingesetzten Entlade-Stromimpulse (13) 3 bis 5 mWs beträgt.

5. Verfahren nach einem der Ansprüche 1 bis 4, dadurch gekennzeichnet, daß am Anfang der einzelnen Zyklen (10, 11) je eine Gesamtstromänderung gleichen Absolutwerts zustandegebracht wird.

6. Verfahren nach einem der Ansprüche 1 bis 5, dadurch gekennzeichnet, daß die belastete Spannung (Um) des Akkumulators in den einzelnen Entladezyklen (11) nach deren Beginn verzögert in bestimmten Probenahmezeitpunkten (ts) gemessen und der Ladevorgang dann abgestellt wird, wenn diese Spannung (Um) einen bestimmten Schwellenwert überschreitet.

7. Schaltungsanordnung zur Durchführung des Verfahrens nach einem der Ansprüche 1 bis 7, wobei an die Klemmen (16, 17) des Akkumulators (15) eine Ladeschaltung und eine Entladeschaltung mit einem ersten und einem zweiten Stromgenerator (18, 28) angeschlossen sind, deren Auslöse- und Abstelleingänge (20, 30, 36, 37) mit dem Ausgang eines gesteuerten Schaltelementes (21) verbunden sind, dessen Steuereingang mit einer die Lade- und Entladezyklen (10, 11) bestimmenden Verzögerungsgruppe (32) in Verbindung steht, dadurch gekennzeichnet, daß die Lade- und Entladeschaltungen einen ersten und einen zweiten, gleichzeitig mit dem ersten (18) bzw. dem zweiten Stromgenerator (30) ausgelösten Impulsgenerator (19, 29) aufweisen, durch welchen jeweils sich steil ändernde Lade- bzw. Entladeimpulse dem Lade- ($I_t$) bzw. Entladestrom ($I_k$) überlagert werden, die in die gleiche Richtung wie dieser ($I_t$ bzw $I_k$) zeigen.

8. Schaltungsanordnung nach Anspruch 7, dadurch gekennzeichnet, daß der erste und zweite Stromgenerator (18, 28) und der erste und zweite Impulsgenerator (19, 29) durch je einen Stromgenerator gesteuerten Quellenstromes verwirklicht sind, an dessen Steuereingang je ein in den Lade- und Entladezyklen (10, 11) Stromsignale vorbestimmten zeitlichen Ablaufes liefernder Signalgenerator angeschlossen ist.

9. Schaltungsanordnung nach Anspruch 7 oder 8, dadurch gekennzeichnet, daß der die Entladezyklen (11) auslösende Ausgang (22) des gesteuerten Schaltelementes (21) über eine Verzögerungsschaltung (23) mit dem Auslöseeingang eines am Akkumulator (15) angeschlossenen Spannungsmessers (24) und der Ausgang des Spannungsmessers (24) mit dem Signaleingang eines mit seinem Ausgang am Auslöse- und Abstelleingang (34, 33) der Verzögerungsgruppe (32) angeschlossenen Vergleichsgliedes (35) verbunden ist, dessen Bezugseingang mit einer Bezugsspannungsquelle (38) in Verbindung steht.

**Revendications**

1. Procédé pour charger des accumulateurs cadmium-nickel, dans lequel l'accumulateur (15) est alimenté au cours des cycles de charge et pendant une première période de temps donnée par un courant de charge de valeur prédéterminée et l'accumulateur (15) est sollicité pendant une deuxième période de temps plus courte au cours des cycles de décharge (11) par un deuxième courant de valeur prédéterminée et les cycles précités (10, 11) sont répétés alternativement, et dans lequel au cours des cycles de charge (10), à chaque fois au début du courant de charge est superposé et dans la même direction que ce courant, une première impulsion de courant d'affichage, à flanc raide (12) dont la variation d'intensité atteint au moins le septuple du courant ($I_{10}$) correspondant à la décharge en 10 heures de l'accumulateur (15), caractérisé en ce qu'au cours de chaque cycle de décharge (11), on superpose au début du courant de décharge et dans la même direction que celui-ci une première impulsion de courant de décharge d'affichage à flanc raide (13), en ce qu'au début de chaque cycle individuel (10, 11), on provoque la variation du courant précité au moins septuple et en ce qu'au cours des cycles individuels on superpose plusieurs autres impulsions de courant à flanc raide au courant prédéterminé de charge et de décharge, l'amplitude et l'énergie de ces autres impulsions de courant atteignant au plus celle de la première impulsion de courant.

2. Procédé selon la revendication 1, caractérisé en ce que la valeur prédéterminée ($I_t$) du courant de charge présente, par comparaison au courant ($I_{10}$) correspondant à la capacité de décharge en dix heures, au plus une valeur triple.

3. Procédé selon la revendication 1 ou 2, caractérisé en ce que la valeur prédéterminée ($I_k$) du courant de décharge est comprise entre la moitié au plus et le quart au moins de la valeur prédéterminée du courant de charge.

4. Procédé selon l'une des revendications 1 à 3, caractérisé en ce que l'énergie de l'impulsion de courant de décharge (13) incluse dans le cycle de décharge (11) est comprise entre 3 et 5 mWs.

5. Procédé selon l'une des revendications 1 à 4, caractérisé en ce qu'au début de chaque cycle individuel (10, 11), on réalise une variation de courant totale de même valeur absolue.

6. Procédé selon l'une des revendications 1 à 5, caractérisé en ce que la tension de décharge (Um) de l'accumulateur est mesuré au cours des cycles individuels de décharge (11), avec retard après le début de ceux-ci, en des points temporels prédéterminés de prise d'échantillon (ts), et en ce que le processus de charge est alors arrêté lorsque cette tension (Um) dépasse une valeur de seuil prédéterminée.

7. Agencement de circuit pour la mise en œuvre du procédé selon l'une des revendications 1 à 6, dans lesquelles bornes (16, 17) de l'accumulateur (15) sont reliées par un circuit de charge et un circuit de décharge à un premier et un deuxième générateur de courant (18, 28) dont les entrées de déclenchement et de coupure (20, 30, 36, 37) sont reliées à la sortie d'un élément de commutation commandé (21) dont l'entrée de commande se trouve en communication avec une unité de retard (32) déterminant les cycles de charge et de décharge (10, 11), caractérisé en ce que les circuits de charge et de décharge comportent un premier et un deuxième générateurs d'impulsions (19, 29) déclenchés en même temps que le premier (18) ou le deuxième (30) générateur d'impulsions et grâce auxquels on peut superposer au courant de charge ($I_t$) ou au courant de décharge ($I_k$), à chaque fois, des impulsions de charge ou de décharge à variation rapide et qui sont orientées dans la même direction que ces courants de charge ou de décharge ($I_t$, $I_k$).

8. Agencement de circuit selon la revendication 7, caractérisé en ce que le premier et le deuxième générateurs de courant (18, 28) ainsi que le premier et le deuxième générateur d'impulsions sont alimentés chacun par un courant de source commandé par le générateur de courant, à l'entrée de commande duquel est connecté un générateur de signal délivrant au cours des cycles de charge et de décharge (10, 11) des signaux de courant de durée temporelle prédéterminée.

9. Agencement de circuit selon la revendication 7 ou 8, caractérisé en ce que la sortie (22) déclenchant les cycles de décharge (11) de l'élément de circuit commandé (21) est relié à l'entrée de déclenchement d'un appareil de mesure de tension (24) relié à l'accumulateur (15) par l'intermédiaire d'un circuit de retard (23) et en ce que la sortie de l'appareil de mesure de tension (24) est reliée à l'entrée de signal d'un organe comparateur (35) connecté par sa sortie à l'entrée de déclenchement et de coupure (34, 33) de l'unité de retard (32), l'entrée de référence de l'organe de comparaison étant reliée à une source de tension de référence (38).

**Claims**

1. Method for charging nickel-cadmium batteries, in which a predetermined charging current is supplied to the battery (15) during charging periods (10) of predetermined first duration and the battery (15) is loaded with predetermined second current during discharging periods (11) of shorter second duration, and said periods (10, 11) are alternatingly repeated, in the beginning of each charging period (10) a current pulse having the same sense and a steep leading edge is superimposed on the charging current ($I_t$) which provides a current change which is at least seven times as high as a current change which corresponds to one tenth of the charging capacity ($I_{10}$) of the battery (15), characterized in that in the beginning of each discharging period (11) a first discharging current pulse (13) is superimposed on the discharging current ($I_k$) which has the same sense and has a steep leading edge, by which in the beginning of each of said periods (10, 11) said at least seven times high current change is provided, and in said charging and discharging periods (10, 11) further steep current pulses are superimposed on said predetermined charging and discharging currents with amplitudes and energy contents being at most as high as that of said first ones of said pulses.

2. The method as claimed in claim 1, characterized in that said predetermined charging current ($I_t$) is at most the treble of said tenth current ($I_{10}$).

3. The method as claimed in claim 1 or 2, characterized in that said predetermined loading current ($I_k$) is at most the half and at least the fourth of said predetermined charging current.

4. The method as claimed in any of claims 1 to 3, characterized in that the energy of the discharging current pulses (13) applied in said discharging periods (11) is between 3 and 5 mWs.

5. The method as claimed in any of claims 1 to 4, charazterized in that in the beginning of the respective periods (10, 11) current changes are provided which have identical absolute values.

6. The method as claimed in any of claims 1 to 5, characterized in that the loaded voltage ($U_m$) of the battery is measured in the respective discharging periods (11) in predetermined sampling moments ($t_s$) following a delay counted from the beginning of the period, and the charging process is finished if this measured voltage ($U_m$) exceeds a predetermined threshold value.

7. Circuit arrangement for carrying out the method as claimed in any of claims 1 to 6, in which a charging and a loading circuit comprising a first and a second current generator (18, 28) are coupled to the terminals (16, 17) of the battery (15), the first and second current generators (18, 28) have respective start and stop inputs (20, 30, 36, 37) which are connected to outputs of a controlled switch (21) with a control input coupled to a timing unit (32) which defines the charging and discharging periods (10, 11) of the battery, characterized in that said charging and loading circuits comprise first and second pulse generators (19, 29) started together with the associated one of said current generators (18, 30) for superimposing steeply changing charging and discharging pulses on the charging current ($I_t$) and on the discharging current ($I_k$), respectively so that the sense of the pulses coincides with the sense of the associated currents ($I_t$, $I_k$).

8. The circuit arrangement as claimed in claim 7, characterized in that the first and second current generators (18, 28) and the first and second pulse generators (19, 29) are formed by respective current generators with controllable source current with control inputs coupled to a waveform generator providing output waveforms that correspond to the predetermined current forms in said charging and discharging periods (10, 11).

9. The circuit arrangement as claimed in claim 7 or 8, characterized in that the output (22) of the controlled switch (21) that starts the discharging periods (11) is coupled through a delay circuit (23) to starting input of a voltmeter (24) connected to the battery (15), and the output of the voltmeter (24) is coupled to the signal input of a comparator (35) having a reference input coupled to a reference voltage source (38) and having respective outputs connected to start and stop inputs (34, 33) of the timing unit (32).

Figur 1

Figur 2.

Figur 3.

Figur 4

EP 0 269 783 B1

Figur 5

Figur 6.

Figur 7

EP 0 269 783 B1

Figur    8

EP 0 269 783 B1